(19) Europäisches Patentamt
European Patent Office
Office européen des brevets

(11) **EP 3 355 466 B1**

(12) **EUROPEAN PATENT SPECIFICATION**

(45) Date of publication and mention
of the grant of the patent:
**13.05.2020 Bulletin 2020/20**

(51) Int Cl.:
***H02P 27/04*** *(2016.01)*    ***H02P 23/00*** *(2016.01)*
***H02P 23/03*** *(2006.01)*    ***H02P 6/18*** *(2016.01)*

(21) Application number: **18153514.7**

(22) Date of filing: **25.01.2018**

(54) **MOTOR CONTROL DEVICE, ROTARY COMPRESSOR SYSTEM AND MOTOR CONTROL METHOD**

MOTORSTEUERUNGSVORRICHTUNG, ROTATIONSKOMPRESSORSYSTEM UND MOTORSTEUERUNGSVERFAHREN

DISPOSITIF DE COMMANDE DE MOTEUR, SYSTÈME À COMPRESSEUR ROTATIF ET PROCÉDÉ DE COMMANDE DE MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2017 JP 2017014271**

(43) Date of publication of application:
**01.08.2018 Bulletin 2018/31**

(73) Proprietor: **MITSUBISHI HEAVY INDUSTRIES THERMAL SYSTEMS, LTD.**
**Tokyo 108-8215 (JP)**

(72) Inventors:
• **OGAWA, Makoto**
**TOKYO, 108-8215 (JP)**
• **SASAKI, Mikito**
**TOKYO, 108-8215 (JP)**
• **SHIMIZU, Kenji**
**TOKYO, 108-8215 (JP)**
• **SATO, Hajime**
**TOKYO, 108-8215 (JP)**

(74) Representative: **Cabinet Beau de Loménie**
**158, rue de l'Université**
**75340 Paris Cedex 07 (FR)**

(56) References cited:
**JP-A- 2005 210 813    JP-A- 2014 079 032**
**US-B1- 7 193 387**

## Description

BACKGROUND OF THE INVENTION

Field of the Invention

The present invention relates to a motor control device, a rotary compressor system, and a motor control method.

Description of Related Art

In the related art, a rotary compressor is used to compress a refrigerant in a refrigerator, an air conditioner, or the like. In a rotary compressor, it is known that the gas compression torque greatly fluctuates during one compression process. For example, Patent Document 1 discloses a technique of controlling a motor of a compressor with a current pattern according to torque fluctuation of one rotation in order to reduce vibration (particularly at the time of low-speed operation) caused by fluctuation of torque. JP 2005-210813 A discloses a motor control device according to the preamble of claim 1, and a method for controlling a motor in a motor control device according to the preamble of claim 9. Further motor control devices and methods are disclosed in JP 2014-079032 A and US 7,193,387 B1.[Patent Document]

[Patent Document 1] Japanese Unexamined Patent Application, First Publication No. 2000-41400

Further, the torque fluctuation during one compressing process causes not only the problem of vibration but also degradation of the motor efficiency of the rotary compressor especially in the low-speed region.

Therefore, an object of the present invention is to provide a motor control device, a rotary compressor system, and a motor control method capable of solving the aforementioned problems.

SUMMARY OF THE INVENTION

According to a first aspect of the present invention, there is provided a motor control device according to claim 1.

In the motor control device of an aspect of the present invention, the control method switching unit is configured to estimate a rotational angle of the motor by model reference adaptive system (MRAS) control in the sensorless vector control.

In the motor control device of an aspect of the present invention, the control method switching unit is configured to switch the control method of the motor to V/f control, when the rotational speed of the motor becomes equal to or higher than a predetermined threshold value.

In the motor control device of an aspect of the present invention, the threshold value is a rotational speed at which the efficiency of the motor using the V/f control when the load fluctuates is lower than the efficiency of the motor using the sensorless vector control.

In the motor control device of an aspect of the present invention, the predetermined threshold value is included in the range of 10 rpm or more and 30 rpm or less.

In the motor control device of an aspect of the present invention, when inertia of the motor rotor of the motor is set as I g.mm$^2$, and the rotational speed lower than the predetermined threshold is set as N rpm, the following formula holds:

$$1.5 \times 10^4 \leq I/N \leq 4.9 \times 10^4.$$

According to an aspect of the present invention, there is provided a rotary compressor system including a rotary compressor; and the motor control device according to any one of the above-mentioned aspects.

According to an aspect of the present invention, there is provided a method for controlling a motor in a motor control device, the method being according to claim 8.

According to the present invention, by appropriately switching the control method of the motor provided in the rotary compressor in accordance with the rotational speed thereof, the efficiency of the motor can be enhanced.

BRIEF DESCRIPTION OF THE DRAWINGS

FIG. 1 is a longitudinal sectional view of a rotary compressor according to an embodiment of the present invention.

FIG. 2 is a first diagram showing a control circuit of the rotary compressor according to an embodiment of the present invention.

FIG. 3 is a second diagram showing the control circuit of the rotary compressor according to an embodiment of the present invention.

FIG. 4 is a third diagram showing the control circuit of the rotary compressor according to an embodiment of the present invention.

FIG. 5 is a diagram showing a motor control device of the rotary compressor according to an embodiment of the present invention.

FIG. 6 is a first diagram showing the efficiency of a motor included in the rotary compressor according to an embodiment of the present invention.

FIG. 7 is a second diagram showing the efficiency of the motor provided in the rotary compressor according to an embodiment of the present invention.

FIG. 8 is a flowchart of the motor control device according to an embodiment of the present invention.

## DETAILED DESCRIPTION OF THE INVENTION

### <Embodiment>

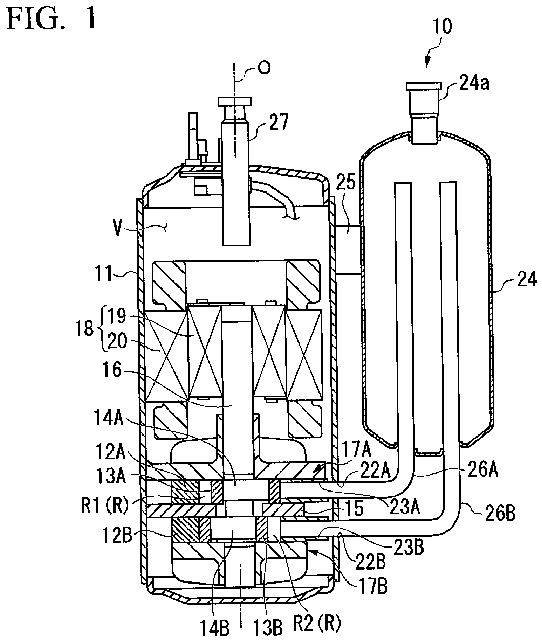

Hereinafter, a rotary compressor system according to an embodiment of the present invention will be described with reference to FIGS. 1 to 8.

FIG. 1 is a side sectional view of a rotary compressor according to an embodiment of the present invention.

As shown in FIG. 1, a compressor 10 according to the present embodiment includes a motor 18, a crankshaft 16 rotated by a motor 18, piston rotors 13A and 13B that rotate eccentrically with the rotation of the crankshaft 16, cylinders 12A and 12B in which a compression chamber for accommodating the piston rotors 13A and 13B is formed, and a housing 11 which forms a discharge space V through which the compressed refrigerant is discharged by enclosing the cylinders 12A and 12B.

The compressor 10 is a so-called two-cylinder type rotary compressor in which disk-shaped cylinders 12A and 12B are provided in two upper and lower stages in a cylindrical housing 11. Cylindrical piston rotors 13A and 13B having outer shapes smaller than the inner sides of the inner wall surfaces of the cylinder are disposed inside the cylinders 12A and 12B. The piston rotors 13A and 13B are inserted into and fixed to the eccentric shaft portions 14A and 14B of the rotary shaft along the center axis of the housing 11, respectively.

The piston rotor 13A of the cylinder on the upper stage side and the piston rotor 13B of the lower stage side are provided so that their phases differ from each other by 180°.

A disk-shaped partition plate 15 is provided between the upper and lower cylinders 12A and 12B. The space R in the cylinder 12A of the upper stage side and the space R of the lower stage side are partitioned by the partition plate 15 into compression chambers R1 and R2 that do not communicate with each other.

The crankshaft 16 is supported to be rotatable around the axis O by an upper bearing portion 17A fixed to the cylinder 12A and a lower bearing portion 17B fixed to the cylinder 12B.

The crankshaft 16 has eccentric shaft portions 14A and 14B that are offset in a direction orthogonal to the center line of the crankshaft 16. As the eccentric shaft portions 14A and 14B pivot about the center axis of the crankshaft 16, the upper and lower piston rotors 13A and 13B rotate eccentrically inside the cylinders 12A and 12B following the pivoting.

The crankshaft 16 protrudes upward from the upper bearing portion 17A (that is, in a direction in which the motor 18 is located when viewed from the compressor 10). At one end portion of the crankshaft 16 in the direction of the axis O, a motor rotor 19 of the motor 18 for rotationally driving the crankshaft 16 is integrally provided. A stator 20 is fixed to the inner circumferential surface of the housing 11 to face the outer circumferential portion of the motor rotor 19.

In the compressor 10, an accumulator 24 for separating the refrigerant into gas and liquid before supplying it to the compressor 10 is fixed to the housing 11 via a stay 25. In the accumulator 24, suction pipes 26A and 26B for suctioning the refrigerant in the accumulator 24 into the compressor 10 are provided. The tip portions of the suction pipes 26A and 26B are connected to the suction ports 23A and 23B through the openings 22A and 22B.

The compressor 10 takes in the refrigerant from the suction port 24a of the accumulator 24 into the interior of the accumulator 24, separates the refrigerant in the accumulator 24 into gas and liquid, and provides the gas phase from the suction pipes 26A and 26B to the compression chambers R1 and R2, which are internal spaces of the cylinders 12A and 12B, via the suction ports 23A and 23B of the cylinders 12A and 12B.

When the piston rotors 13A and 13B rotate eccentrically, the volumes of the compression chambers R1 and R2 gradually decrease, and the refrigerant is compressed. The refrigerant passes the periphery of the motor 18 and then is discharged to a pipe 27 constituting a refrigeration cycle via a discharge port provided in the upper part.

When handling the compression process in the compression chamber focused on one of the compression chamber R1 and the compression chamber R2 and, in some cases, the compression chamber R, the cylinder 12, the piston rotor 13, the eccentric shaft portion 14, and the suction port 23 may be simply described.

The motor 18 of the compressor 10 is driven by the motor control device 70. As will be described later, in driving the motor 18, the motor control device 70 selectively uses two controlling methods of a sensorless vector control and a V/f control, depending on the rotational speed of the motor 18 from the viewpoint of motor efficiency. In particular, in the present embodiment, a model reference adaptive system (MRAS) control is used as an example of the sensorless vector control. First, an example of a control circuit for the sensorless vector control will be described.

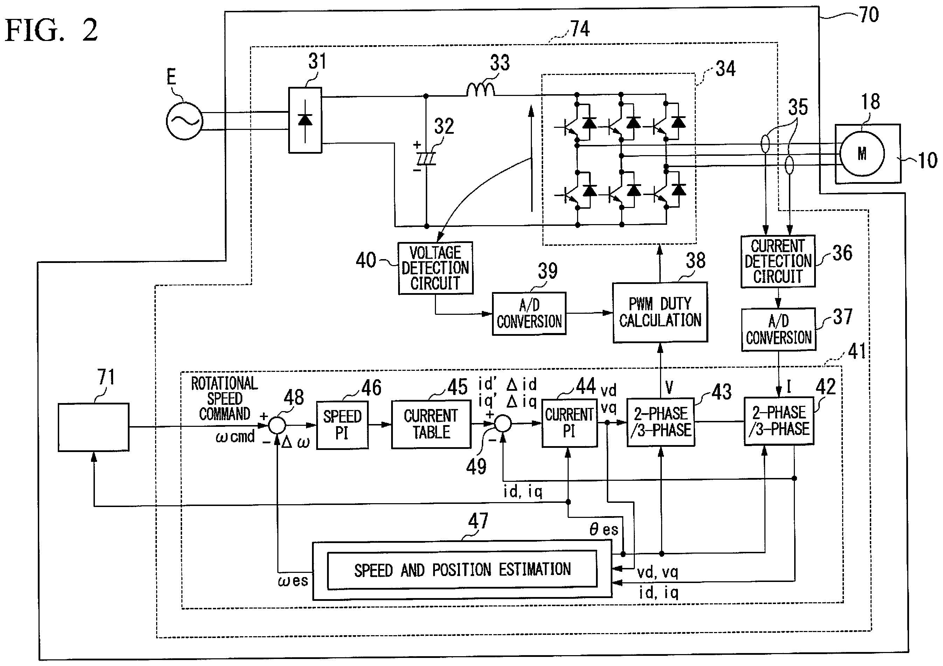

FIG. 2 is a first diagram showing a control circuit of a rotary compressor according to an embodiment of the present invention.

FIG. 2 is a block diagram of a sensorless vector control circuit 74 (an MRAS control unit 74) which controls the motor 18. The sensorless vector control circuit 74 shown in FIG. 2 includes a converter 31, a capacitor 32, a reactor 33, an inverter 34, a current sensor 35, a current detection circuit 36, an A/D conversion circuit 37, a pulse width modulation (PWM) duty calculation circuit 38, an A/D conversion circuit 39, a voltage detection circuit 40, and a full vector control circuit 41. Further, the full vector control circuit 41 includes a 2-phase/3-phase conversion circuit 42, a 2-phase/3-phase conversion circuit 43, a current PI control circuit 44, a current conversion table 45, a speed PI control circuit 46, a speed position estimation circuit 47, a subtractor 48, and a subtractor 49.

The converter 31 rectifies the 3-phase AC current that is input from a power system E. The capacitor 32 and the reactor 33 smooth the rectified voltage to generate a DC voltage. On the basis of the duty command value that is output from the PWM duty calculation circuit 38, the inverter 34 generates 3-phase drive voltages from the DC input voltage, and supplies a drive voltage to the motor 18 included in the compressor 10. Thus, the sensorless vector control circuit 74 drives the motor 18.

The current detection circuit 36 detects the current flowing through the motor 18 and outputs the current to the A/D conversion circuit 37. The A/D conversion circuit 37 converts the current detected by the current detection circuit 36 into a digital signal, and outputs the converted signal to the full vector control circuit 41. In the full vector control circuit 41, the 2-phase/3-phase conversion circuit 42 performs the coordinate conversion (dq conversion) of the 3-phase signals that are input from the A/D conversion circuit 37, and outputs the converted current values id and iq to the speed position estimation circuit 47. Further, the 2-phase/3-phase conversion circuit 42 refers to a previous estimated value θes of a magnetic pole angle generated by the motor rotor 19 to be described later. The speed position estimation circuit 47 inputs the current values id and iq and the electric power command values vd and vq in the dq coordinate system that is output from the current PI control circuit 44, and calculates an estimated value ωes of the rotational speed of the motor 18 and an estimated value θes of the magnetic pole angle (angle of the magnetic pole position) of the motor rotor 19, for example, by a method called model reference adaptive system (MRAS).

The subtractor 48 calculates a deviation Δω between the command value ωcmd of the rotational speed generated by the rotational speed command unit 71 and the estimated value ωes of the rotational speed estimated by the speed position estimation circuit 47, and outputs the deviation to the speed PI control circuit 46. The speed PI control circuit 46 calculates a torque command value which reduces the deviation (set the deviation to 0) by the PI control on the basis of Δω. A full vector control circuit 41 converts the torque command value into the current command values id' and iq' on the basis of the current conversion table 45. The subtractor 49 calculates deviations Δid and Δiq between the current command values id' and iq', and id and iq which are output from the 2-phase/3-phase conversion circuit 42, and outputs the deviation to the current PI control circuit 44. The current PI control circuit 44 calculates the voltage command values vd and vq which reduce the deviation (set the deviation to 0) by the PI control on the basis of the deviations Δid and Δiq. The current PI control circuit 44 outputs the voltage command values vd and vq to the 2-phase/3-phase conversion circuit 43. The 2-phase/3-phase conversion circuit 43 performs the coordinate conversion of the voltage command values vd and vq from 2-phase to 3-phase with reference to the estimated value θes of the magnetic pole angle of the motor rotor 19 estimated by the speed position estimation circuit 47, and outputs the voltage command value V to the PWM duty calculation circuit 38. The PWM duty calculation circuit 38 inputs the voltage command value V, and a signal obtained by digitally converting the DC input voltage to the inverter 34 detected by the voltage detection circuit 40 by the A/D conversion circuit 39, and calculates the duty command value. The PWM duty calculation circuit 38 outputs the calculated duty command value to the inverter 34.

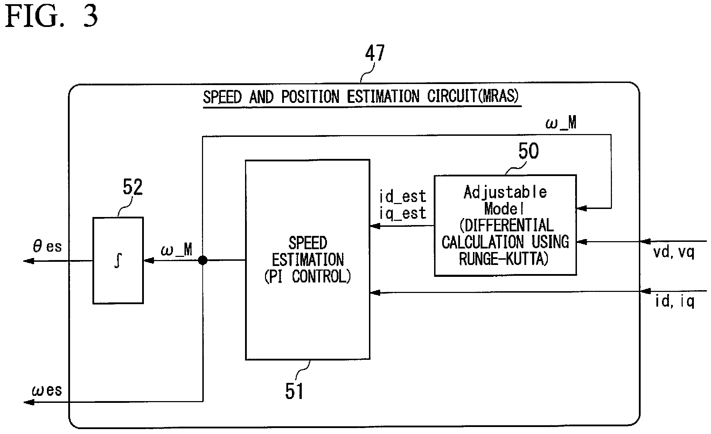

FIG. 3 is a second diagram showing the control circuit of the rotary compressor according to an embodiment of the present invention.

FIG. 3 shows a block diagram of the speed position estimation circuit 47. The speed position estimation circuit 47 includes a current estimation circuit 50, a speed estimation circuit 51, and an integration circuit 52. The current estimation circuit 50 inputs the electric power command values vd and vq, and an estimated value ω_M of the rotational speed of the motor rotor 19 estimated by the speed estimation circuit 51, and is configured to estimate the current estimated values id_est and iq_est on the basis of an adjustable model obtained by modeling the motor 18. The speed estimation circuit 51 inputs the current estimated values id_est, iq_est, id, and iq, and performs estimation (ω_M) of the rotational speed. The integration circuit 52 integrates the estimated value ω_M of the rotational speed to calculate the estimated value θes of the magnetic pole angle of the motor rotor 19. The speed position estimation circuit 47 sets the estimated value ω_M of the rotational speed estimated by the speed estimation circuit 51 as the estimated value ωes of the rotational speed, and outputs the estimated value ωes together with the estimated value θes of the magnetic pole angle of the motor rotor 19 calculated by the integration circuit 52.

Since the interior of the compressor 10 becomes a high-temperature and high-pressure environment, it is difficult to provide a sensor for detecting the position of the piston rotor 13. According to the sensorless vector control (for example, MRAS control) using the control circuit shown in FIGS. 2 and 3, it is possible to detect the rotational speed or the magnetic pole angle of the motor rotor 19 with high accuracy without using a sensor. Hereinafter, in some cases, the rotational speed of the motor rotor 19 is referred to as the rotational speed of the motor 18, and the magnetic pole angle of the motor rotor 19 is referred to as the magnetic pole angle of the motor 18.

Next, an example of a control circuit of the V/f control will be described.

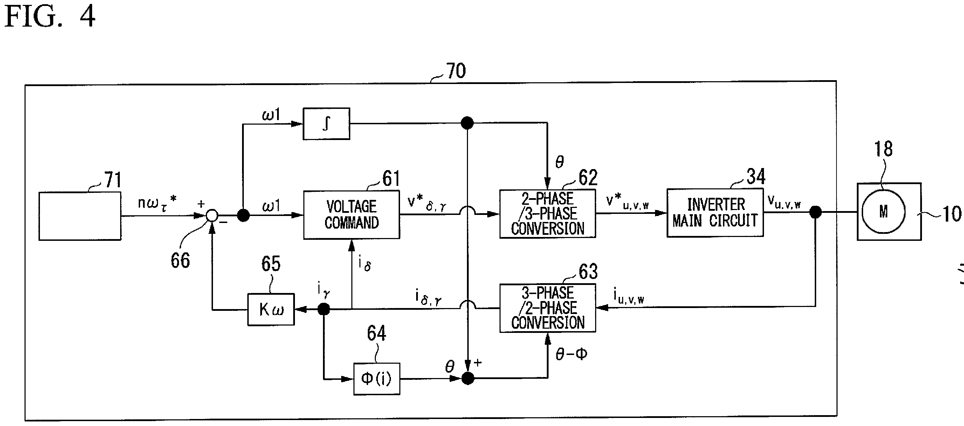

FIG. 4 is a third diagram showing the control circuit of the rotary compressor according to the embodiment of the present invention.

FIG. 4 shows a block diagram of a V/f control circuit 73 (a V/f control unit 73) which controls the motor 18. The V/f control circuit 73 shown in FIG. 4 is equipped with a voltage command calculation circuit 61, a 2-phase/3-phase conversion circuit 62, a 3-phase/2-phase conversion circuit 63, a power factor angle calculation circuit 64, a multiplier 65, and a subtractor 66. In FIG. 4, the symbol $\omega m$ is the rotational speed command, the symbol n is the number of pole pairs of the motor, the symbol $\omega 1$ is an inverter output frequency (a primary frequency), the symbols $v\delta^*$ and $v\gamma^*$ are $\delta$ axis and $\gamma$ axis voltage commands, respectively, the symbols vu*, vv* and vw* are voltage commands of a u-phase, a v-phase and a w-phase, respectively, the symbols vu, vv and vw are output voltages of the u-phase, the v-phase and the w-phase, respectively, the symbols iu, iv and iw are output currents of the u-phase, the v-phase and the w-phase, respectively, the symbols $i\delta$ and $i\gamma$ are the inverter output currents of the $\delta$ axis and the $\gamma$ axis, respectively, the symbol $i\delta$ is an exciting current component, and the symbol $i\gamma$ is a torque current component. The symbol $\theta$ is the output voltage phase, and the symbol $\phi$ is the power factor angle.

The 3-phase/2-phase conversion circuit 63 is configured to use $\theta-\phi$ obtained by subtracting $\phi$ calculated by the power factor angle calculation circuit 64 from $\theta$ rather than $\theta$ in the rotary shaft used when performing the 3-phase/2-phase conversion of the current of the motor 18. The multiplier 65 multiplies the current subjected to the 3-phase/2-phase conversion with $\theta-\phi$ as the rotary shaft by the gain $K\omega$. The subtractor 66 subtracts the value obtained by multiplying the gain $K\omega$ from the rotational speed command value $n\omega^*$ of the rotational speed command unit 71, and calculates a corrected rotational speed command value $\omega 1$. The voltage command calculation circuit 61 inputs the corrected rotational speed command value $\omega 1$ or the like, and calculates the voltage command value. The voltage command calculation circuit 61 outputs the calculated voltage command value to the inverter 34. According to the circuit shown in FIG. 4, it is possible to efficiently drive the motor 18 by minimizing the current, while keeping simple V/f control as a foundation. The control circuit in FIG. 4 is described in detail in Japanese Patent No. 4,764,124.

Next, switching of the control method of the present embodiment will be described.

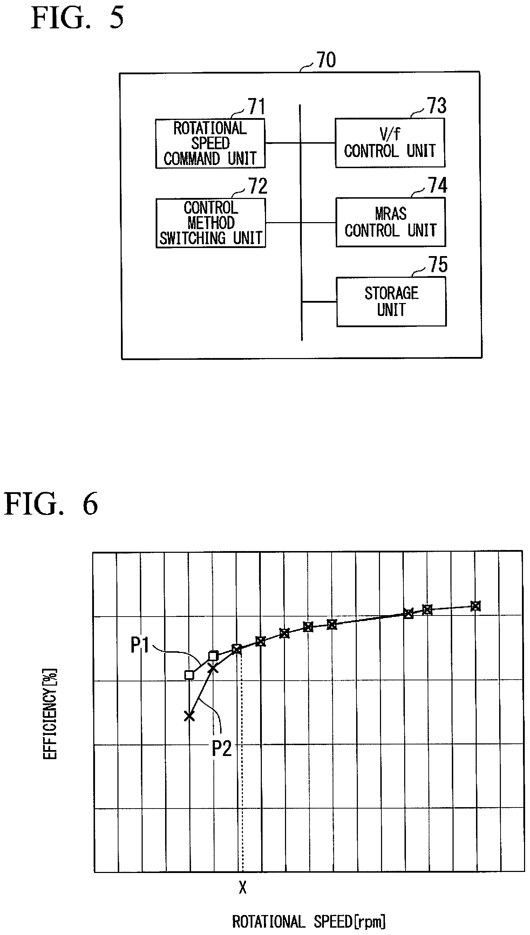

FIG. 5 is a diagram showing a motor control device of the rotary compressor according to an embodiment of the present invention.

The motor control device 70 is a computer such as a micro controller unit (MCU). As shown in FIG. 5, the motor control device 70 includes a rotational speed command unit 71, a control method switching unit 72, a V/f control unit 73, an MRAS control unit 74, and a storage unit 75.

The rotational speed command unit 71 calculates a command value of the rotational speed of the motor 18.

The control method switching unit 72 performs switching of the control method of the motor on the basis of the rotational speed calculated by the rotational speed command unit 71. For example, the control method switching unit 72 is configured to switch the control method of the motor to the sensorless vector control in the low-speed region in which the rotational speed of the motor is less than a predetermined threshold value. Further, when the rotational speed of the motor is equal to or higher than the predetermined threshold value, the control method switching unit 72 is configured to switch the control method of the motor to the V/f control.

The V/f control unit 73 has, for example, the circuit shown in FIG. 4, and controls the inverter 34 by the V/f control.

The MRAS control unit 74 has, for example, the circuit shown in FIGS. 2 and 3, and controls the inverter 34 by the sensorless vector control (MRAS control).

The storage unit 75 stores information such as a threshold value that serves as an index of switching of the control method by the control method switching unit 72.

FIG. 6 is a first diagram showing the efficiency of the motor included in the rotary compressor according to the embodiment of the present invention.

FIG. 6 shows a relationship between the rotational speed and the efficiency of the motor 18 when the inverter 34 is controlled by the V/f control. A graph PI shows a relationship between the rotational speed and the motor efficiency when the load is constant. A graph P2 shows a relationship between the rotational speed and the motor efficiency when the load fluctuates. As shown by the graphs PI and P2, the efficiency of the motor 18 is lowered in the low-speed region. However, when the load fluctuates, the tendency is more noticeable. In the rotary compressor 10, the gas compression torque largely fluctuates during one compression process. Further, the fluctuation of the gas compression torque during one compression process increases as the rotational speed decreases. That is, during operation of the rotary compressor 10, particularly in the low-speed region, the efficiency of the motor 18 shows the same transition as in the graph P2. Further, in the air conditioner equipped with the rotary compressor 10, a case in which the rotational speed of the motor 18 decreases until the noticeable decrease in the motor efficiency corresponds to a case in which a cooling intermediate output is performed, among a heating rated output, a heating intermediate output, a cooling rated output, and the cooling intermediate output. As the case of performing the cooling intermediate output, for example, the operation after reaching the set temperature during cooling is considered. That is, when the inverter 34 is controlled by the V/f control, for example, in the case of performing the cooling operation for a long period of time, there is a possibility that a large amount of time after reaching the set temperature will be needed in the state in which the motor efficiency is reduced. In this embodiment, a motor control method for operating the rotary compressor 10 while maintaining the high motor efficiency even in such a scenario is provided.

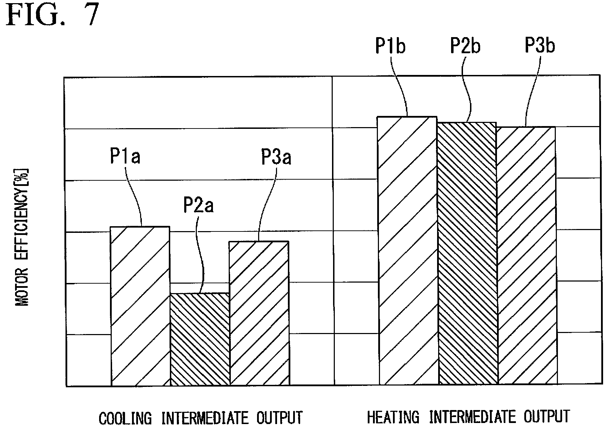

FIG. 7 is a second diagram showing the efficiency of the motor provided in the rotary compressor according to the embodiment of the present invention.

FIG. 7 is a graph in which the efficiency of the motor 18 when the inverter 34 is controlled by the V/f control and the efficiency of the motor 18 when the inverter 34 is controlled by the sensorless vector control are compared for each rotational speed region (the cooling intermediate output and the heating intermediate output). Further, in the sensorless vector control, the MRAS control is used to estimate the rotational angle of the motor 18. Graphs P1a and P1b show the motor efficiency at the time of the constant load when the inverter 34 is controlled by the V/f control. Graphs P2a and P2b show the motor efficiency at the time of load fluctuation when the inverter 34 is controlled by the V/f control. Graphs P3a and P3b show the motor efficiency at the time of load fluctuation when the inverter 34 is controlled by the sensorless vector control.

The left graph of FIG. 7 shows graphs P1a to P3a at the time of cooling intermediate output and, and the right graph of FIG. 7 shows graphs P1b to P3b at the time of heating intermediate output. Further, the rotational speed of the motor 18 at the time of the cooling intermediate output is the rotational speed region below X rpm at which the motor efficiency decreases in FIG. 6. Further, the rotational speed of the motor 18 at the time of the heating intermediate output is higher than X rpm.

As shown in the left graph, the efficiency (P3a) of the motor 18 using the sensorless vector control is higher than the efficiency (P2a) of the motor 18 using the V/f control at the time of cooling intermediate output (at the time of low speed) when the load fluctuates. The efficiency (P3a) of the motor 18 using the sensorless vector control at the time of cooling intermediate output is equal to the efficiency (P1a) of the motor 18 using the V/f control when the load is constant. When using the sensorless vector control in this manner, the motor 18 can be driven without lowering the motor efficiency even in the region in which the rotational speed is low. This is because the motor is greatly affected especially when rotating at a low speed while the gas compression torque greatly fluctuates at the time of one compressing process. However, according to the sensorless vector control, it is considered possible to perform the control to maintain a constant rotational speed, while estimating the rotational speed of the motor 18 with high accuracy. In the present embodiment, the inverter 34 is controlled by switching to the sensorless vector control in the low-speed region in which the motor efficiency using the V/f control decreases with respect to the fluctuating load.

Further, as shown in the right graph, the efficiency (P2b) of the motor 18 using the V/f control at the time of heating intermediate output when the load fluctuates is substantially equal to the efficiency (P3b) of the motor 18 using the sensorless vector control. However, the efficiency (P2b) of the motor 18 using the V/f control is slightly higher than the efficiency (P3b) of the motor 18 using the sensorless vector control. In the present embodiment, the inverter 34 is controlled by the V/f control on the rotational speeds other than the low-speed region in which the motor efficiency using the V/f control decreases with respect to the fluctuating load.

Further, both at the time of the cooling intermediate output and at the time of the heating intermediate output, the sensorless vector control obtains the result of a slight decrease in the inverter efficiency (not shown) as compared to the V/f control. However, even considering the reduction in inverter efficiency, it is known that the sensorless vector control is more efficient at the time of the cooling intermediate output.

Further, the rotational speed at which the efficiency of the motor 18, which is an exemplary example of the efficiency in FIGS. 6 and 7, decreases is X rpm. For example, if the torque or the rotational speed in a situation in which the motor 18 is actually used changes, the value of the threshold value X rpm at which the decrease in efficiency occurs may also change. However, the value is considered to be within a range of approximately 10 rpm to 30 rpm. In this case, the relationship between the inertia and the rotational speed to which the sensorless vector control is applied can be expressed by the following formula. If the inertia ($g \cdot mm^2$) is set as I and the rotational speed is set as N (rpm), the following formula holds:

$$1.5 \times 10^4 \leq I/N \leq 4.9 \times 10^4 \ ...(1)$$

According to the motor 18 of the same size, it can be considered that the decrease in efficiency can be prevented when applying the sensorless vector control within the range that satisfies the above formula (1). Further, the range in which the sensorless vector control is applied in the low-speed region of the present embodiment is not limited to the formula (1).

Next, switching processing of the control method using the motor control device 70 will be described.

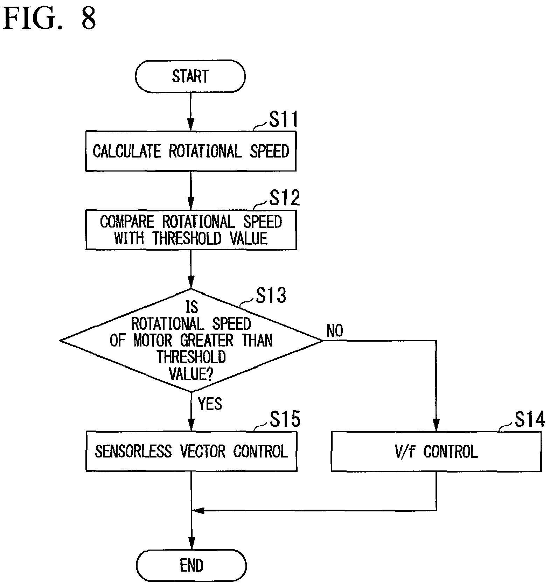

FIG. 8 is a flowchart of a motor control device according to an embodiment of the present invention.

As a premise, a threshold value of the rotational speed used for switching the control method is recorded in the storage unit 75. The threshold value is a certain rotational speed in a low-speed region in which the motor efficiency using the V/f control noticeably decreases. The threshold value is determined in advance by experiments or calculations. Further, the motor control device 70 is assumed to drive the motor 18 of the rotary compressor 10. The rotary compressor 10 is provided in an outdoor unit or the like of the air conditioner, and the control device of the air conditioner controls the rotational speed or the like of the rotary compressor 10 in accordance with the set temperature and the room temperature designated by the user. The motor control device 70 inputs a command signal from the control device of the air conditioner to control the rotational speed of the motor 18.

First, the rotational speed command unit 71 calculates the rotational speed of the motor 18 on the basis of the command signal from the control device of the air conditioner (step S11). The rotational speed command unit 71 outputs the calculated rotational speed value to a control method switching unit 72. Next, the control method switching unit 72 reads the threshold value of the rotational speed from the storage unit 75, and compares the threshold value with the rotational speed acquired from the rotational speed command unit 71 (step S12). When the rotational speed of the motor is equal to or higher than the threshold value (step S13; Yes), the control method switching unit 72 decides to control the inverter 34 by the V/f control (step S14). Further, the control method switching unit 72 instructs the rotational speed command unit 71 to output the command value of the rotational speed to the V/f control unit 73. The rotational speed command unit 71 outputs the command value of the rotational speed calculated in step S11 to the V/f control unit 73. For example, in the example of FIG. 4, the rotational speed command unit 71 outputs the rotational speed to the subtractor 66. The V/f control unit 73 controls the inverter 34 by the V/f control.

Further, when the rotational speed of the motor is less than the threshold value (step S13; No), the control method switching unit 72 decides to control the inverter 34 by the sensorless vector control (step S15). The control method switching unit 72 instructs the rotational speed command unit 71 to output the command value of the rotational speed to the MRAS control unit 74. The rotational speed command unit 71 outputs the calculated command value of the rotational speed to the MRAS control unit 74. For example, in the example of FIG. 2, the rotational speed command unit 71 outputs the command value to the subtractor 48. The MRAS control unit 74 controls the inverter 34 by the sensorless vector control (MRAS control).

According to the present embodiment, by accurately estimating the rotational speed of the motor 18 to control the rotational speed by the sensorless vector control (MRAS control), the rotational speed of the motor 18 can be kept constant even in the low-speed region which is greatly influenced by fluctuation of the gas compression torque in the rotary compressor 10. Therefore, the efficiency of the motor 18 can be kept high even in the low-speed region in which the motor efficiency tends to decrease. Further, regarding the rotational speed region other than the low-speed region, even when the load fluctuates, the motor efficiency (and the inverter efficiency) is higher in the case of controlling by the V/f control widely used in the related art than in the case of controlling by the sensorless vector control. Thus, switching to the motor control using the V/f control is performed in the rotational speed region. As a result, regardless of the rotational speed of the motor 18, the motor 18 can be driven with high efficiency for all rotational speed regions. Accordingly, conventionally, even in the case of a rotary compressor having the lowered efficiency when operating at a low speed, it is possible to operate the rotary compressor while maintaining high efficiency in all rotational speed regions.

As the motor 18, various kinds of motors such as a permanent magnet synchronous motor and an induction motor can be applied. Further, the rotational speed control of this embodiment can be applied to a multi-cylinder rotary compressor. Further, the sensorless vector control other than the MRAS control may be applied to the control circuit of the present embodiment.

Further, the rotary compressor system is configured to include the motor control device 70, the sensorless vector control circuit 74, and the rotary compressor 10. Further, the control system is configured to include the motor control device 70 and the sensorless vector control circuit 74. The rotary compressor system of the present embodiment is used in an air conditioner. The speed position estimation circuit 47 is an example of an MRAS control circuit.

EXPLANATION OF REFERENCES

10 Compressor
11 Housing
12A, 12B Cylinder
13A, 13B Piston rotor
16 Crankshaft
18 Motor
22A, 22B Opening
23A, 23B Suction port
24 Accumulator
25 Stay
26A, 26B Suction pipe
31 Converter
32 Capacitor
33 Reactor
34 Inverter
35 Current sensor
36 Current detection circuit
37 A/D conversion circuit
38 PWM duty calculation circuit
39 A/D conversion circuit
40 Voltage detection circuit
41 Full vector control circuit
42, 43 2-phase/3-phase conversion circuit
44 Current PI control circuit
45 Current conversion table
46 Speed PI control circuit
47 Speed position estimation circuit
48 Subtractor
49 Subtractor
50 Current estimation circuit
51 Speed estimation circuit
52 Integration circuit
61 Voltage command calculation circuit
62 2-phase/3-phase conversion circuit

63 3-phase/2-phase conversion circuit
64 Power factor angle calculation circuit
65 Multiplier
66 Subtractor
70 Motor control device
71 Rotational speed command unit
72 Control method switching unit
73 V/f control unit
74 MRAS control unit (sensorless vector control circuit)
75 Storage unit

**Claims**

1. A motor control device (70) comprising:

   a control method switching unit (72) which is configured to acquire a rotational speed of a motor (18) configured to rotationally drive a piston rotor (13A, 13B) of a rotary compressor (10) for an air conditioner, and to switch a control method of the motor (18) to a control method with higher efficiency on the basis of the efficiency of the motor at the acquired rotational speed, **characterized in that** the control method switching unit (72) is configured to switch the control method of the motor (18) to sensorless vector control when the rotational speed of the motor (18) during a cooling intermediate output becomes less than a predetermined threshold value, the cooling intermediate output being an operation after a set temperature have been reached during cooling.

2. The motor control device (70) according to claim 1, wherein the control method switching unit (72) is configured to estimate a rotational angle of the motor (18) by model reference adaptive system (MRAS) control in the sensorless vector control.

3. The motor control device (70) according to claim 2, wherein the control method switching unit (72) is configured to switch the control method of the motor (18) to V/f control when the rotational speed of the motor (18) during a heating intermediate output becomes higher than the predetermined threshold value.

4. The motor control device (70) according to any one of claims 1 to 3, wherein the threshold value is a rotational speed at which the efficiency of the motor (18) using the V/f control when the load fluctuates is lower than the efficiency of the motor (18) using the sensorless vector control.

5. The motor control device (70) according to any one of claims 1 to 4, wherein the predetermined threshold value is included in the range of 10 rpm or more and 30 rpm or less.

6. The motor control device (70) according to any one of claims 1 to 5, wherein, when inertia of the motor rotor (19) of the motor (18) is set as I g·mm$^2$, and the rotational speed lower than the predetermined threshold is set as N rpm, the following formula holds:

$$1.5 \times 10^4 \leq I/N \leq 4.9 \times 10^4.$$

7. A rotary compressor system comprising:

   a rotary compressor (10); and
   the motor control device (70) according to any one of claims 1 to 6.

8. A method for controlling a motor (18) in a motor control device (70), the method comprising:

   acquiring a rotational speed of a motor (18) configured to rotationally drive a piston rotor (13A, 13B) of a rotary compressor (10) for an air conditioner; and
   switching a control method of the motor (18) to a control method with higher efficiency on the basis of efficiency of the motor (18) at the acquired rotational speed,
   the method being **characterized by** comprising switching the control method of the motor (18) to sensorless vector control when the rotational speed of the motor (18) during a cooling intermediate output becomes less than a predetermined threshold value, the cooling intermediate output being an operation after a set temperature have been reached during cooling.

**Patentansprüche**

1. Motorsteuervorrichtung (70), die Folgendes umfasst:

   eine Steuerverfahrenumschalteinheit (72), die dazu ausgelegt ist, eine Rotationsgeschwindigkeit eines Motors (18), der dazu ausgelegt ist, einen Kolbenrotor (13A, 13B) eines Rotationsverdichters (10) für eine Klimaanlage rotierend anzutreiben, zu erfassen und ein Steuerverfahren des Motors (18) auf Basis der Effizienz des Motors mit der erfassten Rotationsgeschwindigkeit auf ein Steuerverfahren mit höherer Effizienz umzuschalten, **dadurch gekennzeichnet, dass** die Steuerverfahrenumschalteinheit (72) dazu ausgelegt ist, das Steuerverfahren des Motors (18) auf eine sensorlose Vektorsteuerung umzuschalten, wenn die Rotationsgeschwindigkeit des Motors (18) während einer Kühlungszwischenausgabe geringer als ein vorbestimmter Schwellwert wird, wobei die Kühlungszwischenausgabe ein Betrieb ist, nachdem eine eingestellte Temperatur während der Kühlung erreicht wurden.

2. Motorsteuervorrichtung (70) nach Anspruch 1, wobei die Steuerverfahrenumschalteinheit (72) dazu ausgelegt ist, durch eine Modellreferenzadaptivsystem(MRAS)-Steuerung einen Rotationswinkel des Motors (18) in der sensorlosen Vektorsteuerung zu schätzen.

3. Motorsteuervorrichtung (70) nach Anspruch 2, wobei die Steuerverfahrenumschalteinheit (72) dazu ausgelegt ist, das Steuerverfahren des Motors (18) auf eine V/f-Steuerung umzuschalten, wenn die Rotationsgeschwindigkeit des Motors (18) während einer Heizungszwischenausgabe höher als der vorbestimmte Schwellwert wird.

4. Motorsteuervorrichtung (70) nach einem der Ansprüche 1 bis 3, wobei der Schwellwert eine Rotationsgeschwindigkeit ist, bei der die Effizienz des Motors (18) unter Verwendung der V/f-Steuerung, wenn die Last schwankt, geringer ist als die Effizienz des Motors (18) unter Verwendung der sensorlosen Vektorsteuerung.

5. Motorsteuervorrichtung (70) nach einem der Ansprüche 1 bis 4, wobei der vorbestimmte Schwellwert im Bereich von 10 U/Min oder mehr und 30 U/Min oder weniger beinhaltet ist.

6. Motorsteuervorrichtung (70) nach einem der Ansprüche 1 bis 5, wobei, wenn eine Trägheit des Motorrotors (19) des Motors (18) als I g·mm² eingestellt ist und die Rotationsgeschwindigkeit geringer als der vorbestimmte Schwellwert als N U/Min eingestellt ist, die folgende Formel gilt:

$$1{,}5 \times 10^{4} \leq I/N \leq 4{,}9 \times 10^{4}.$$

7. Rotationsverdichtersystem, das Folgendes umfasst:

einen Rotationsverdichter (10); und
die Motorsteuervorrichtung (70) nach einem der Ansprüche 1 bis 6.

8. Verfahren zum Steuern eines Motors (18) in einer Motorsteuervorrichtung (70), wobei das Verfahren Folgendes umfasst:

Erfassen einer Rotationsgeschwindigkeit eines Motors (18), der dazu ausgelegt ist, einen Kolbenrotor (13A, 13B) eines Rotationsverdichters (10) für eine Klimaanlage rotierend anzutreiben; und
Umschalten eines Steuerverfahrens des Motors (18) auf Basis der Effizienz des Motors (18) mit der erfassten Rotationsgeschwindigkeit auf ein Steuerverfahren mit höherer Effizienz,
wobei das Verfahren **dadurch gekennzeichnet ist, dass** es das Umschalten des Steuerverfahrens des Motors (18) auf eine sensorlose Vektorsteuerung umfasst, wenn die Rotationsgeschwindigkeit des Motors (18) während einer Kühlungszwischenausgabe geringer als ein vorbestimmter Schwellwert wird, wobei die Kühlungszwischenausgabe ein Betrieb ist, nachdem eine eingestellte Temperatur während der Kühlung erreicht wurden.

**Revendications**

1. Dispositif de commande de moteur (70) comprenant :

une unité de commutation de procédé de commande (72) qui est configurée pour acquérir une vitesse de rotation d'un moteur (18) configuré pour entraîner en rotation un rotor à piston (13A, 13B) d'un compresseur rotatif (10) pour un climatiseur, et pour commuter un procédé de commande du moteur (18) sur un procédé de commande à rendement supérieur sur la base du rendement du moteur à la vitesse de rotation acquise,
**caractérisé en ce que** l'unité de commutation de procédé de commande (72) est configurée pour commuter le procédé de commande du moteur (18) sur une commande vectorielle sans capteur lorsque la vitesse de rotation du moteur (18) pendant une sortie intermédiaire de refroidissement devient inférieure à une valeur seuil prédéterminée, la sortie intermédiaire de refroidissement étant une opération après qu'une température de consigne a été atteinte pendant le refroidissement.

2. Dispositif de commande de moteur (70) selon la revendication 1, dans lequel l'unité de commutation de procédé de commande (72) est configurée pour estimer un angle de rotation du moteur (18) par une commande de système adaptatif à référence de modèle (MRAS) dans la commande vectorielle sans capteur.

3. Dispositif de commande de moteur (70) selon la revendication 2, dans lequel l'unité de commutation de procédé de commande (72) est configurée pour commuter le procédé de commande du moteur (18) sur une commande de rapport tension/fréquence, V/f, lorsque la vitesse de rotation du moteur (18) pendant une sortie intermédiaire de chauffage devient supérieure à la valeur seuil prédéterminée.

4. Dispositif de commande de moteur (70) selon l'une quelconque des revendications 1 à 3, dans lequel la valeur seuil est une vitesse de rotation à laquelle le rendement du moteur (18) utilisant la commande V/f lorsque la charge fluctue est inférieur au rendement du moteur (18) utilisant la commande vectorielle sans capteur.

5. Dispositif de commande de moteur (70) selon l'une quelconque des revendications 1 à 4, dans lequel la valeur seuil prédéterminée est incluse dans la plage de 10 tr/min ou plus et 30 tr/min ou moins.

6. Dispositif de commande de moteur (70) selon l'une quelconque des revendications 1 à 5, dans lequel, lorsque l'inertie du rotor moteur (19) du moteur (18) est définie comme étant I g·mm², et la vitesse de rotation inférieure au seuil prédéterminé est définie comme étant N tr/min, la formule suivante est valable :

$$1,5 \times 10^4 \leq I/N \leq 4,9 \times 10^4.$$

7. Système à compresseur rotatif comprenant :

un compresseur rotatif (10) ; et
le dispositif de commande de moteur (70) selon l'une quelconque des revendications 1 à 6.

8. Procédé de commande d'un moteur (18) dans un dispositif de commande de moteur (70), le procédé comprenant :

l'acquisition d'une vitesse de rotation d'un moteur (18) configuré pour entraîner en rotation un rotor à piston (13A, 13B) d'un compresseur rotatif (10) pour un climatiseur ; et
la commutation d'un procédé de commande du moteur (18) sur un procédé de commande à rendement supérieur sur la base du rendement du moteur (18) à la vitesse de rotation acquise,
le procédé étant **caractérisé en ce qu'**il comprend la commutation du procédé de commande du moteur (18) sur une commande vectorielle sans capteur lorsque la vitesse de rotation du moteur (18) pendant une sortie intermédiaire de refroidissement devient inférieure à une valeur seuil prédéterminée, la sortie intermédiaire de refroidissement étant une opération après qu'une température de consigne a été atteinte pendant le refroidissement.

FIG. 1

FIG. 2

EP 3 355 466 B1

# FIG. 3

SPEED AND POSITION ESTIMATION CIRCUIT(MRAS) — 47

50 — Adjustable Model (DIFFERENTIAL CALCULATION USING RUNGE-KUTTA)

51 — SPEED ESTIMATION (PI CONTROL)

52 — ∫

Inputs: vd, vq ; id, iq

Signals: ω_M ; id_est, iq_est

Outputs: θ es ; ω es

EP 3 355 466 B1

FIG. 4

# FIG. 5

```
                                    ┌─70
┌─────────────────────────────────────────────────────┐
│   ┌─71                          ┌─73                 │
│  ┌──────────────┐              ┌──────────────┐      │
│  │ ROTATIONAL   │              │ V/f          │      │
│  │ SPEED        │              │ CONTROL UNIT │      │
│  │ COMMAND UNIT │              └──────────────┘      │
│  └──────────────┘                                    │
│   ┌─72                          ┌─74                 │
│  ┌──────────────┐              ┌──────────────┐      │
│  │ CONTROL      │              │ MRAS         │      │
│  │ METHOD       │              │ CONTROL UNIT │      │
│  │ SWITCHING    │              └──────────────┘      │
│  │ UNIT         │                                    │
│  └──────────────┘               ┌─75                 │
│                                ┌──────────────┐      │
│                                │ STORAGE      │      │
│                                │ UNIT         │      │
│                                └──────────────┘      │
└─────────────────────────────────────────────────────┘
```

# FIG. 6

ROTATIONAL SPEED[rpm]

15

FIG. 7

MOTOR EFFICIENCY[%]

P1b    P2b    P3b

P1a    P3a
    P2a

COOLING INTERMEDIATE OUTPUT            HEATING INTERMEDIATE OUTPUT

FIG. 8

```
                    ┌──────────┐
                    │  START   │
                    └────┬─────┘
                         │           ⌒S11
              ┌──────────▼──────────┐
              │ CALCULATE ROTATIONAL SPEED │
              └──────────┬──────────┘
                         │           ⌒S12
              ┌──────────▼──────────┐
              │ COMPARE ROTATIONAL SPEED │
              │   WITH THRESHOLD VALUE   │
              └──────────┬──────────┘
                         │           ⌒S13
                    ╱────▼────╲
                   ╱    IS     ╲
                  ╱ ROTATIONAL  ╲
                 ╱ SPEED OF MOTOR ╲──── NO
                 ╲ GREATER THAN   ╱
                  ╲  THRESHOLD   ╱
                   ╲   VALUE?   ╱
                    ╲────┬────╱
                       YES         ⌒S15           ⌒S14
              ┌──────────▼──────────┐      ┌──────────────┐
              │ SENSORLESS VECTOR CONTROL │  │  V/f CONTROL  │
              └──────────┬──────────┘      └──────┬───────┘
                         │                        │
                         │◄───────────────────────┘
                    ┌────▼─────┐
                    │   END    │
                    └──────────┘
```

**EP 3 355 466 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005210813 A
- JP 2014079032 A
- US 7193387 B1
- JP 2000041400 A
- JP 4764124 B